# EUROPEAN PATENT APPLICATION

(11) **EP 4 778 778 A1**
(43) Date of publication of application: **22.07.2026**
(21) Application number: 24758126.7
(22) Date of filing: 23.02.2024
(51) Int. Cl.: B60N 2/14, B60N 2/02

(54) **SEAT TURNTABLE MECHANISM AND VEHICLE**

(30) Priority: 12.09.2023 CN 202311172032; 12.09.2023 CN 202322472470 U; 12.10.2023 CN 202311335962
(71) Applicant: Hubei Aviation Precision Machinery Technology Co., Ltd., High-Tech Zone Xiangyang, Hubei 441003 (CN)
(72) Inventor: SU, Wenkong, Xiangyang, Hubei 441003 (CN); XU, Jun, Xiangyang, Hubei 441003 (CN)
(74) Representative: Witte, Weller & Partner Patentanwälte mbB
(86) International application number: PCT/CN2024/078271
(87) International publication number: WO 2025/055263

(57) **Abstract**

A seat turntable mechanism and a vehicle are provided. The seat turntable mechanism includes a movable disc (1) and a fixed disc (2), which are limitedly connected in an axial direction and are rotatable relative to each other in a circumferential direction. The seat turntable mechanism further includes a core member (3), a limiting member, and a drive component (4). In the core member (3), an inner toothed plate (31) is provided with an inner gear ring (a), an outer toothed plate (32) is provided with an outer gear ring (b), an eccentric component, the inner gear ring (a), and the outer gear ring (b) forms a small teeth difference planetary gear transmission mechanism, and a gap elimination component is configured to eliminate gaps between each component. The drive component (4) is in transmission connection with the eccentric component. The limiting member is configured to limit self-rotation of the outer toothed plate (32), so as to allow the outer toothed plate (32) to perform circular motion. The outer toothed plate (32) drives the inner toothed plate (31) to rotate. The inner toothed plate (31) is fixedly connected to the movable disc (1). According to the present application, the core member is used as a rotating joint, and the limiting member eliminates the eccentric movement of a seat, so that the free rotation gap of the turntable mechanism is eliminated, and the riding comfort is improved.

## Description

The present application claims priorities to Chinese Patent Application No. 2023111720325, titled "SEAT TURNTABLE MECHANISM AND VEHICLE", filed on September 12, 2023, Chinese Patent Application No. 2023224724705, titled "SEAT TURNTABLE MECHANISM AND VEHICLE", filed on September 12, 2023 and Chinese Patent Application No. 2023113359628, titled "SEAT TURNTABLE MECHANISM AND VEHICLE", filed on October 12, 2023 with the China National Intellectual Property Administration, which are incorporated herein by reference in their entireties.

### FIELD

The present application relates to the technical field of seats, and in particular to a seat turntable mechanism and a vehicle.

### BACKGROUND

At present, a rotating mechanism used to realize the rotation of a seat around a vertical axis usually adopts the mechanical principle of gear transmission. Specifically, a gear and rack transmission unit is used. A rack is of a semicircular structure, a motor drives a gear to rotate through a motor gearbox, and the rack is driven to rotate through tooth meshing to realize the rotation of the seat.

There are a side gap and a free gap in the cooperation between the gear and the rack, and in the motor gearbox, thus a gap-free locking cannot be achieved, which may lead to shaking of the seat in the rotation direction and even produce noise, thereby reducing the comfort of the seat. Moreover, the locking strength of this technical solution is relatively low, so that it is necessary to add an external locking mechanism for increasing the strength of the product, thus the structure is complex, the process difficulty is high, and the cost is high.

Therefore, how to provide a seat turntable mechanism that eliminates the side gap and the free gap to realize the gap-free locking, provides seat comfort, and has high locking strength, a simple structure, and low cost, is an urgent technical problem to be solved by those skilled in the art.

### SUMMARY

A seat turntable mechanism and a seat are provided according to the present application.

The seat turntable mechanism includes a movable disc and a fixed disc. The movable disc is configured to connect a seat, and the fixed disc is configured to connect a bottom plate. The movable disc and the fixed disc are connected and axially limited and are rotatable relative to each other in a circumferential direction. The seat turntable mechanism further includes a core member, a limiting member, and a drive component,
the core member includes an inner toothed plate having an inner gear ring, an outer toothed plate having an outer gear ring, an eccentric component, and a gap elimination component. The inner toothed plate is provided with a shaft shoulder, the outer toothed plate is provided with a shaft-center hole, and the outer gear ring meshes with the inner gear ring. A radial eccentric area is formed between the shaft shoulder and the shaft-center hole. The eccentric component is located in the radial eccentric area. The eccentric component, the inner gear ring, and the outer gear ring constitute a small teeth difference planetary gear transmission mechanism. The gap elimination component is located in the radial eccentric area and is configured to apply a circumferential force to eliminate a gap between the eccentric component and the shaft-center hole, and a gap between meshing teeth;
the drive component is in transmission connection with the eccentric component, and the limiting member is configured to limit self-rotation of the outer toothed plate, so that the outer toothed plate performs a circular motion under the combined action of the eccentric component and the limiting member. The outer toothed plate is configured to drive the inner toothed plate to rotate, and the inner toothed plate is fixedly connected to the movable disc.

Optionally, the limiting member includes a guide block, a slider, and a guide-groove block,
the guide block is fixedly connected to the outer toothed plate, a slider guide groove is provided inside the slider, and the slider guide groove extends in a first direction, the guide block is located in the slider guide groove, the guide block is only configured to move in the first direction in the slider guide groove,
limiting protrusions extending in opposite directions are provided at two ends of the slider in a second direction, a sliding-groove structure is provided inside the guide-groove block, two ends of the sliding-groove structure in the second direction have limiting portions extending in opposite directions, the slider is mounted in the sliding-groove structure, and the limiting protrusions are located in the limiting portions in a one-to-one correspondence, the slider is only configured to move in the second direction in the sliding-groove structure, the guide-groove block is fixedly connected to the fixed plate, and the first direction and the second direction are perpendicular to each other.

Optionally, the number of the limiting protrusion arranged at each end of the slider is at least one. In a case that the number of the limiting protrusions arranged at each end of the slider is two or more, the limiting protrusions at the same end are spaced apart in the first direction.

Optionally, the seat turntable mechanism further includes an annular pressure disc. An outer edge of the annular pressure disc is fixedly connected to an outer edge of the fixed plate, a limiting space that is annular is formed between the annular pressure disc and the fixed plate, and an outer edge of the movable disc is located in the limiting space;
the seat turntable mechanism further includes rolling assemblies, the rolling assemblies are located between the movable disc and the fixed disc, and between the annular pressure disc and the movable disc, the annular pressure disc and the fixed disc apply a pressing force to the movable disc through the rolling assemblies.

Optionally, an inner concave portion that is annular is provided in the middle of the movable disc, and an outer convex portion that is annular is provided at a corresponding position of the fixed disc, a ball groove is formed inside the outer convex portion, and one of the rolling assemblies is mounted in the ball groove and abuts against an inner wall of the inner concave portion;
and/or, an annular convex portion protruding outward is provided in the middle of the annular pressure disc, an annular groove is formed inside the annular convex portion, and the rolling assembly is mounted in the annular groove and abuts against a corresponding side wall of the movable disc.

Optionally, an inner edge of the annular pressure disc is bent towards one side close to the movable disc and forms an abutting portion, and there is a gap between the abutting portion and an outer side wall of the movable disc.

Optionally, each of the movable disc and the fixed disc is correspondingly provided with a bent portion at a position close to the outer edge, an annular accommodating space extending obliquely is formed between the two bent portions, and one of the rolling assemblies is mounted in the annular accommodating space.

Optionally, the seat turntable mechanism further includes a positioning ring, the positioning ring is fixedly connected to a side wall of the movable disc facing the fixed disc, in an installation state, the positioning ring is located at an outer periphery of the guide-groove block, the positioning ring and the guide-groove block partially overlap in the axial direction, and opposite peripheral walls of the positioning ring and the guide-groove block are limited in a radial direction.

Optionally, the outer edge of the fixed plate has a first connection portion, and the outer edge of the annular pressure disc has a second connection portion that is firstly bent towards the first connection portion and then extends parallel to the first connection portion. The first connection portion and the second connection portion are fixedly connected, and there is a gap between the outer edge of the movable disc and an inner wall of the second connection portion.

Optionally, the movable disc is provided with a protrusion protruding outward between the inner concave portion and the bent portion, a mounting bolt is fixed at the protrusion, and the mounting bolt is configured to be fixedly connected to the seat.

A vehicle including a seat and the seat turntable mechanism described above is also provided according to the present application. The seat is connected to a bottom plate of the vehicle through the seat turntable mechanism.

In the above technical solutions, the seat turntable mechanism adopts the core member as a rotating joint, and the limiting member is provided to eliminate the eccentric movement of the core member, so that the concentric rotation of the seat is realized. By utilizing the structural characteristics of the core member, a 360° stepless rotation adjustment for the seat can be realized, the side gap and the free rotation gap of the seat turntable mechanism are eliminated to realize the gap-free locking, and the seat is prevented from shaking in the rotation direction or even producing noise, and the ride comfort of an user is improved. Moreover, by utilizing the characteristics that the core member has a high structural strength, an equivalent locking strength at any angle position, and a good isotropic strength, the locking strength of the seat turntable mechanism can be improved, so that the seat turntable mechanism has good locking performance. In addition, the rotation of the seat turntable mechanism can be realized by a motor without adding an external lock mechanism, so that the structure is simple, the assembly is easy, the operation is smooth, and the cost is low.

### BRIEF DESCRIPTION OF THE DRAWINGS

The above and other objects, features, and advantages of the present application become more apparent through a more detailed description of the embodiments of the present application in conjunction with the drawings. The drawings are used to provide a further understanding of the embodiments of the present application, constitutes a part of the specification, are used to explain the present application together with the embodiments of the present application, and do not constitute a limitation of the present application. In the drawings, the same reference sign generally represents the same component or step.
Figure 1 is a schematic structural diagram of a seat turntable mechanism according to a first specific embodiment of the present application;
Figure 2 is an exploded view of the seat turntable mechanism shown in FIG. 1 from a first angle;
Figure 3 is a cross-sectional view of a core member in the seat turntable mechanism shown in FIG. 1;
Figure 4 is an exploded view of the core member in the seat turntable mechanism shown in FIG. 1 from the first angle;
Figure 5 is an exploded view of the core member in the seat turntable mechanism shown in FIG. 1 from a second angle;
Figure 6 is an exploded view of the core member in the seat turntable mechanism shown in FIG. 1 from a third angle;
Figure 7 is an exploded view of the core member in the seat turntable mechanism shown in FIG. 1 from a fourth angle;
Figure 8 is an exploded view of the seat turntable mechanism shown in FIG. 1 from the second angle;
Figure 9 is a partial cross-sectional view of the seat turntable mechanism shown in FIG. 1;
Figure 10 is a cross-sectional view of the seat turntable mechanism shown in FIG. 1;
Figure 11 is an exploded view of a first fixing manner of a guide-groove block and a fixed disc in the seat turntable mechanism shown in FIG. 1;
Figure 12 is a schematic diagram of a fixing state of a second fixing manner of the guide-groove block and the fixed disc in the seat turntable mechanism shown in FIG. 1;
Figure 13 is an exploded view of the second fixing manner of the guide-groove block and the fixed disc in the seat turntable mechanism shown in FIG. 1;
Figure 14 is an exploded view of a third fixing manner of the guide-groove block and the fixed disc in the seat turntable mechanism shown in FIG. 1;
Figure 15 is a partial cross-sectional view of a seat turntable mechanism according to a second specific embodiment of the present application;
Figure 16 is a cross-sectional view of the seat turntable mechanism according to the second specific embodiment of the present application;
Figure 17 is a structural cross-sectional view of a first implementation for limiting the rotational degrees of freedom of a movable disc in the seat turntable mechanism shown in FIG. 1;
Figure 18 is a force analysis diagram of a rolling assembly in FIG. 17; and
Figure 19 is a structural cross-sectional view of a second implementation for limiting the rotational degrees of freedom of the movable disc in the seat turntable mechanism shown in FIG. 1.

The reference signs in FIG.s 1 to 19 are listed as follows:
1 - movable disc; 10 - punching feature; 1a - inner concave portion; 1A - bent portion; 1b - protrusion;
2 - fixed disc; 2a - connection hole; 2b - accommodating holes; 2c - outer convex portion; 21 - first connection portion;
3 - core member; 31 - inner toothed plate; a - inner gear ring; 31a - shaft shoulder; 31b - bump feature; 32 - outer toothed plate; b - outer gear ring; 32a - shaft-center hole; 33 - eccentric wheel; 33a - positioning groove; 34 - wedge block; 34a - positioning hole; 35 - wedging torsion spring; 351 - first axial support foot; 352 - second axial support foot; 36 - locking plate; 36a - locking groove; 36b - locking hole; 37 - drive element; 38 - drive shaft; 38a - spline hole; 39 - drive arm; 310 - protective sleeve;
4 - drive component;
51 - guide block; 52 - slider; 52a - slider guide groove; 52b - avoidance hole; 521 - limiting protrusion; 53 - guide-groove block; 53a - sliding-groove structure; 53a1 - limiting portion; 53b - stamping boss;
6 - annular pressure disc; 6a - annular convex portion; 61 - abutting portion; 62 - second connection portion;
7 - rolling assembly;
8 - positioning ring;
9 - self-lubricating bushing;
01 - rivet;
02 - mounting bolt; and
o - annular accommodating space.

### DETAILED DESCRIPTION OF EMBODIMENTS

In order to enable those skilled in the art to better understand the technical solution of the present application, the present application is further described in detail below in conjunction with the drawings and specific embodiments.

The term "multiple" herein usually refers to two or more. In the case that the term "multiple" is used to indicate the number of certain components, it does not indicate the interrelationship of the number of these components.

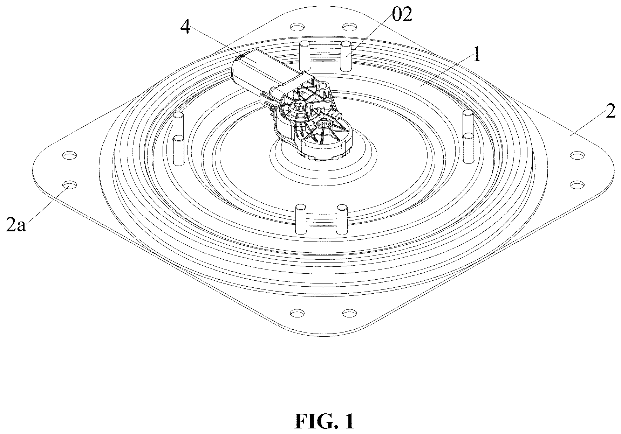

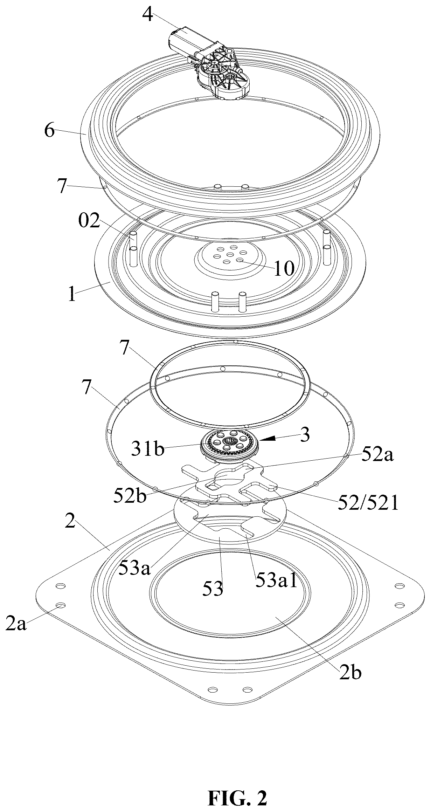

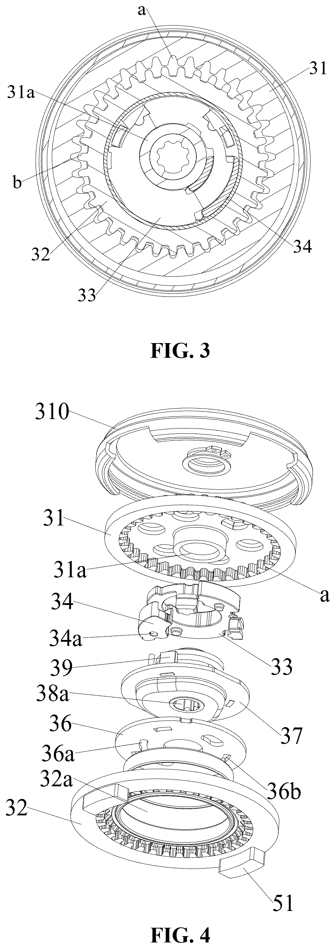

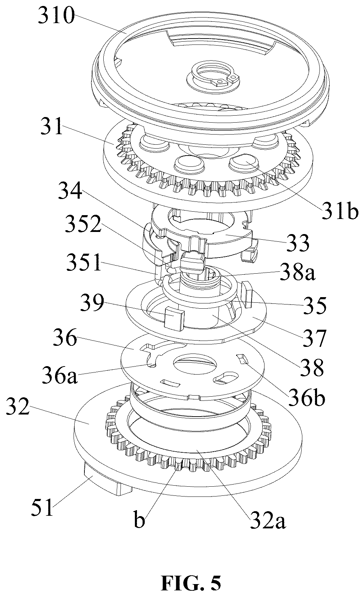

Reference is made to FIGS. 1 to 5. FIG. 1 is a schematic structural diagram of a seat turntable mechanism according to a first specific embodiment of the present application; FIG. 2 is an exploded view of the seat turntable mechanism shown in FIG. 1 from a first angle; FIG. 3 is a cross-sectional view of a core member in the seat turntable mechanism shown in FIG. 1; FIG. 4 is an exploded view of the core member in the seat turntable mechanism shown in FIG. 1 from the first angle; and an exploded view of the core member in the seat turntable mechanism shown in FIG. 1 from a second angle.

A seat turntable mechanism, which includes a movable disc 1 and a fixed disc 2, is provided according to the present application. The movable disc 1 is configured to connect a seat, and the fixed disc 2 is configured to connect a bottom plate. The movable disc 1 and the fixed disc 2 are connected and axially limited and are rotatable relative to each other in a circumferential direction. In this way, the seat can rotate relative to the bottom plate when the movable disc 1 rotates relative to the fixed disc 2.

In order to realize relative rotation of the movable disc 1 and the fixed disc 2, eliminate a side gap and free rotation gap of the seat turntable mechanism, and improve the comfort of the seat, the seat turntable mechanism according to the present application further includes a core member 3, a limiting member, and a drive component 4.

As shown in FIGS. 3 to 5, the core member 3 includes an inner toothed plate 31 having an inner gear ring a, an outer toothed plate 32 having an outer gear ring b, an eccentric component, and a gap elimination component. The inner toothed plate 31 is provided with a shaft shoulder 31a, the outer toothed plate 32 is provided with a shaft-center hole 32a, and there is a tooth-number difference between the inner gear ring a and the outer gear ring b. After assembly, the outer gear ring b meshes with the inner gear ring a, and the shaft shoulder 31a is inserted into the shaft-center hole 32a, and the shaft shoulder 31a is eccentrically arranged relative to the shaft-center hole 32a. That is, a radial eccentric area is formed between the shaft shoulder 31a and the shaft-center hole 32a. The eccentric component is arranged in the radial eccentric area. The eccentric component, the inner ring gear a, and the outer ring gear b constitute a small teeth difference planetary gear transmission mechanism. The gap elimination component is located in the radial eccentric area and is configured to apply a circumferential force to eliminate gaps between the eccentric component and the shaft-center hole 32a, and between meshing teeth of the outer ring gear b and the inner ring gear a, so as to ensure gap-free transmission between the inner toothed plate 31 and the outer toothed plate 32.

It can be seen from the mechanical principle that the inner toothed plate 31 and the outer toothed plate 32 are eccentrically arranged. In other words, when one of the parts is fixed, the other of the parts rotates on its own axis and revolves. The seat may not rotate concentrically if the parts are directly applied to the seat turntable mechanism, which affecting the ride comfort of a user. Therefore, there is a need to add a mechanism for eliminating eccentric motion and ensuring concentricity. The limiting member is configured to limit the self-rotation of the outer toothed plate 32, and the drive component 4 is in transmission connection with the eccentric component. When the drive component 4 drives the eccentric component to rotate, the outer toothed plate 32 can perform circular motion under the combined action of the eccentric component and the limiting member. Additionally, since the outer gear ring b and the inner gear ring a are always in mesh, the outer toothed plate 32 can drive the inner toothed plate 31 to rotate. The inner toothed plate 31 is fixedly connected to the movable disc 1, thereby realizing concentric rotation of the seat.

In summary, according to the seat turntable mechanism of the present application, the core member 3 is used as a rotating joint, and the limiting member is provided to eliminate the eccentric movement of the core member 3, so that the concentric rotation of the seat is realized. By utilizing the structural characteristics of the core member 3, a 360° stepless rotation adjustment for the seat can be realized, the side gap and the free rotation gap of the seat turntable mechanism are eliminated to realize the gap-free locking, and the seat can be prevented from shaking in the rotation direction or even producing noise, and the ride comfort of the user is improved. Moreover, by utilizing the characteristics that the core member 3 has a high structural strength, an equivalent locking strength at any angle position, and a good isotropic strength, the locking strength of the seat turntable mechanism can be improved, so that the seat turntable mechanism has good locking performance. In addition, the rotation of the seat turntable mechanism can be realized by a motor without adding an external lock mechanism, so that the structure is simple, the assembly is easy, the operation is smooth, and the cost is low.

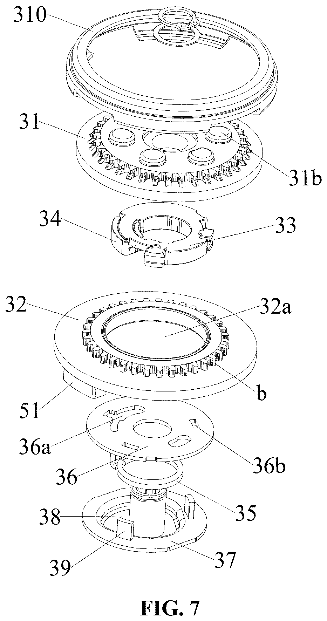

Continuing to refer to FIGS. 3 to 7, FIG. 6 is an exploded view of the core member in the seat turntable mechanism shown in FIG. 1 from a third angle; and FIG. 7 is an exploded view of the core member in the seat turntable mechanism shown in FIG. 1 from a fourth angle.

In the core member 3, the eccentric component specifically includes an eccentric wheel 33, the gap elimination component specifically includes a wedge block 34, a wedging torsion spring 35, and a locking plate 36. The eccentric wheel 33 has a concave portion, the wedge block 34 is arranged in the concave portion, and axial outer end faces of the two roughly flush. The concave portion 41 is configured to reduce an axial size of the core member 3. The wedge block 34 can rotate circumferentially in the radial eccentric area, that is, rotate around the shaft shoulder 31a of the inner toothed plate 31. The wedging torsion spring 35 has a first axial support foot 351 and a second axial support foot 352 that are arranged in the same direction. The locking plate 36 has a locking groove 36a, and the wedge block 34 has a positioning hole 34a. During assembly, the two axial support feet are required to be pre-twisted and deformed. The first axial support foot 351 passes through the locking groove 36a in the locking plate 36, and then abuts against an inner wall of the concave portion. The inner wall is provided with a positioning groove 33a that is semicircular arc-shaped and matches an outer diameter of the second axial support foot 352, so as to improve the installation stability of the wedging torsion spring 35. The second axial support foot 352 also passes through the locking groove 36a in the locking plate 36, and then is inserted into the positioning hole 34a of the wedge block 34.

The elastic deformation energy generated by the pre-compression of the wedging torsion spring 35 acts on the wedge block 34 and the eccentric wheel 33 and drives them to rotate circumferentially towards a small-diameter section of the eccentric area to a wedged state. In this state, inner surfaces of the wedge block 34 and the eccentric wheel 33 abut against the shaft shoulder 31a, and outer surfaces of the wedge block 34 and the eccentric wheel 33 abut against the shaft-center hole 32a, thereby eliminating the meshing gap between the inner gear ring a and the outer gear ring b.

The aforementioned components are in the wedged state when the core member 3 is in a non-adjustment state. In a radial direction, contours of two sides of the concave portion of the eccentric wheel 33 are located inside the contour of the wedge block 34. When a large load is applied, the elastic deformation of each part in contact changes in their self-locking state. Under the action of the shaft shoulder 31a of the inner toothed plate 31 and the shaft-center hole 32a of the outer toothed plate 32, the wedge block 34 overcomes the action of the wedging torsion spring 35 to rotate circumferentially. When the wedge block 34 rotates to the point where contours of two sides of the wedge block 34 is located inside the contours of two sides of the eccentric wheel 33, the contour of an outer side of the concave portion of the eccentric wheel 33 is in contact with an inner wall of the shaft-center hole 32a, and the contour of an inner side of the concave portion of the eccentric wheel 33 is in contact with the shaft shoulder 31a. At this time, the wedge block 34 no longer rotates, and the wedge block 34 and the eccentric wheel 33 jointly prevent an eccentric distance from further decreasing, ensuring an effective meshing of the inner gear ring a and the outer gear ring b, thereby improving the strength of the entire seat turntable mechanism.

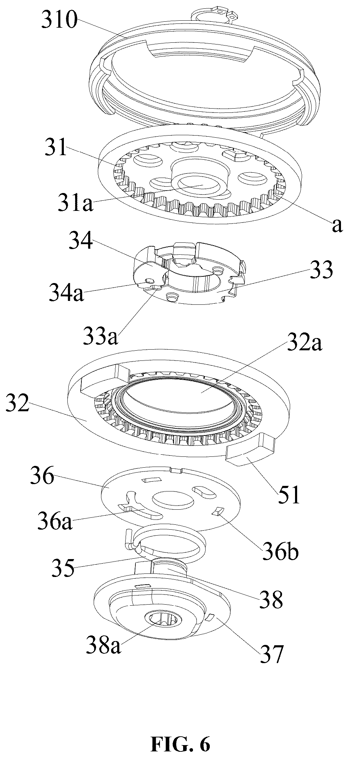

Continuing to refer to FIGS. 6 and 7, the core member 3 further includes a drive element 37. The drive element 37 is fixedly connected to a drive shaft 38. A spline hole 38a extending axially is provided inside the drive shaft 38, and an output end of the drive component 4 is connected to a spline shaft. The spline shaft is at least partially inserted into the spline hole 38a to circumferentially limit the position, so that the drive component 4 can drive the drive element 37 to rotate through the spline shaft.

Further, the drive element 37 is fixed with two drive arms 39, and the locking plate 36 has two locking holes 36b that match with shapes of the drive arms 39. Each of the drive arms 39 is inserted into a corresponding locking hole 36b, so that the drive element 37 can drive the locking plate 36 to rotate synchronously. The eccentric wheel 33 is provided with a first accommodating area and a second accommodating area. An upper portion of the second accommodating area partially overlaps with the wedge block 34 in the circumferential direction. One of the drive arms 39 passes through the corresponding locking hole 36b in the locking plate 36 and is arranged in the first accommodating area, and the other of the drive arms 39 passes through the corresponding locking hole 36b in the locking plate 36 and is arranged in the second accommodating area, and then the drive arms 39 abut against corresponding end walls of the wedge block 34, thereby realizing the transmission connection between the drive component 4 and the eccentric component.

When the seat is rotated, the drive component 4 can be controlled to rotate forward or reverse as needed. When the drive component 4 rotates forward, the drive arm 39 located in the first accommodating area pushes the eccentric wheel 33 to rotate synchronously, so as to overcome an elastic force of the wedging torsion spring 35 to release the wedging. The small teeth difference planetary gear transmission mechanism is driven to realize a forward rotation of the outer toothed plate 32 relative to the inner toothed plate 31.

When the drive component 4 is rotated in the reverse direction, the drive arm 39 located in the second accommodating area pushes the corresponding end wall of the wedge block 34, so as to overcome the elastic force of the wedging torsion spring 35 to release the wedging, until the wedge block 34 and the second accommodating area are just staggered in the circumferential direction at most. When the drive arm 39 abuts against the corresponding side wall of the second accommodating area, the small teeth difference planetary gear transmission mechanism is driven to realize the reverse rotation of the outer toothed plate 32 relative to the inner toothed plate 31.

In addition, the core member 3 further includes a protective sleeve 310. Both the outer toothed plate 32 and the inner toothed plate 31 are arranged in the protective sleeve 310. The closing end of the protective sleeve 310 is fixedly connected to the outer toothed plate 32, and the drive shaft 38 passes through the middle of the wedging torsion spring 35, the locking plate 36, the inner toothed plate 31, and the protective sleeve 310 in sequence. One end of the drive shaft 38 exposed out of the protective sleeve 310 has a clamping groove, and an elastic retaining ring is mounted in the clamping groove, so as to realize the axial positioning of components in the core member 3.

The drive component 4 may be a driving motor, and it is feasible for the driving motor to be arranged on the movable disc 1, the seat, or the fixed disc 2, which is not limited here.

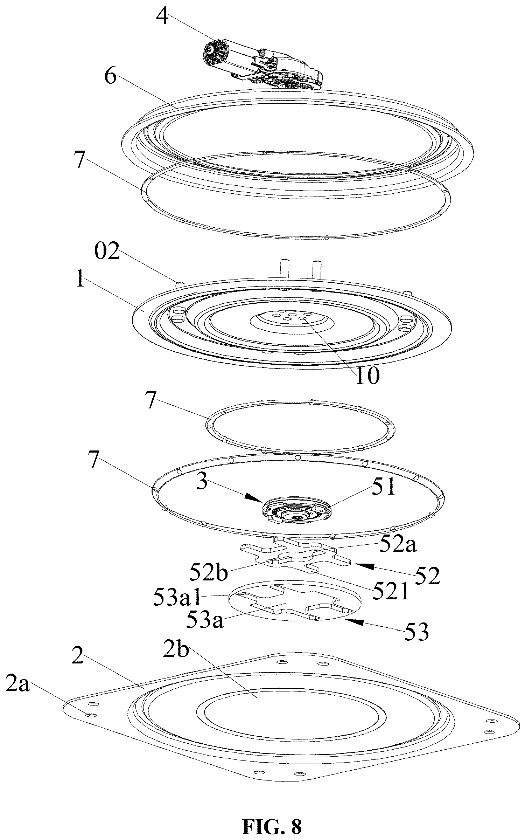

Continuing to refer to FIGS. 2 and 8, FIG. 8 is an exploded view of the seat turntable mechanism shown in FIG. 1 from the second angle.

As mentioned above, the fixed disc 2 is configured to connect the bottom plate, and the specific connection manner is not limited. For example, the fixed disc 2 may be fixed to the bottom plate by a bolt or welding. In the case that the fixed disc 2 and the bottom plate are fixed by a bolt, the fixed disc 2 is provided with two connecting holes 2a at each of four corners of the fixed disc 2, the bottom plate is provided with threaded holes correspondingly, fixing bolts are also included, and the fixing bolts pass through the connecting holes 2a in one-to-one correspondence and are screwed with the threaded holes at corresponding positions to realize the fixation of the fixed disc 2 and the bottom plate.

In practical applications, the number of connecting holes 2a is not limited, as long as the stability of the connection between the fixed disc 2 and the bottom plate can be ensured.

Further, as mentioned above, the inner toothed plate 31 and the movable disc 1 are fixedly connected, and the specific connection manner is not limited. For example, the inner toothed plate 31 and the movable disc 1 may be fixed by welding or a bolt. In the embodiment, a side wall of the inner toothed plate 31 facing the movable disc 1 is provided with a bump feature 31b, and a punching feature 10 is provided at a corresponding position of the movable disc 1. The bump feature 31b and the punching feature 10 are fitted in a plug-in manner correspondingly, and the inner toothed plate 31 and the movable disc 1 are welded and fixed.

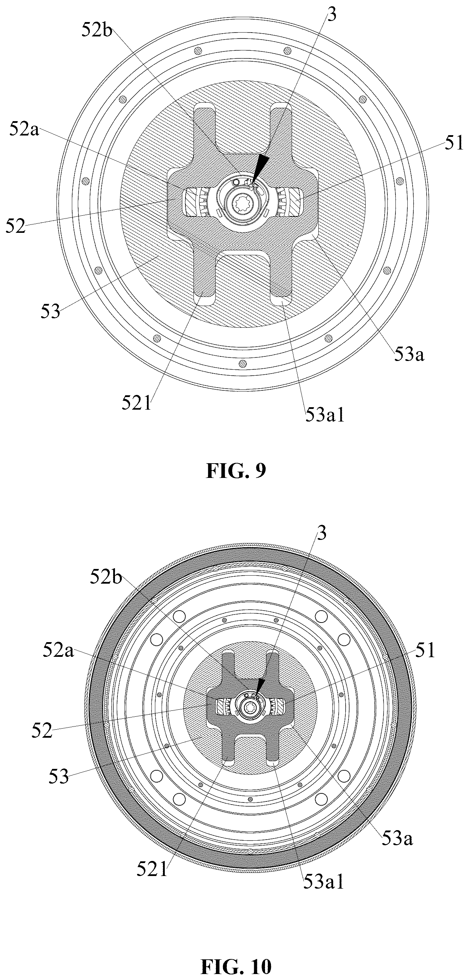

Continuing to refer to FIGS. 2, 6, 9, and 10, FIG. 9 is a partial cross-sectional view of the seat turntable mechanism shown in FIG. 1; and FIG. 10 is a cross-sectional view of the seat turntable mechanism shown in FIG. 1.

In the present application, the limiting member includes a guide block 51, a slider 52, and a guide-groove block 53,
the guide block 51 is fixedly connected to the outer toothed plate 32, a slider guide groove 52a is provided inside the slider 52, the slider guide groove 52a extends in a first direction, and the guide block 51 is located inside the slider guide groove 52a, the guide block 51 can only move in the first direction in the slider guide groove 52a,
two ends of the slider 52 in a second direction are provided with limiting protrusions 521 extending in opposite directions, and a sliding-groove structure 53a is provided inside the guide-groove block 53, two ends of the sliding-groove structure 53a in the second direction have limiting portions 53a1 extending in opposite directions, the slider 52 is mounted in the sliding-groove structure 53a, and the limiting protrusions 521 are located in the limiting portions 53a1 in a one-to-one correspondence, the slider 52 is only configured to move in the second direction in the sliding-groove structure 53a, and the guide-groove block 53 is fixedly connected to the fixed disc 2, the first direction and the second direction are perpendicular to each other.

In this way, the slider guide groove 52a inside the slider 52 and the guide block 51 correspondingly cooperate with each other to circumferentially limit the position, so that the guide block 51 can only slide along the extension direction of the slider guide groove 52a, that is, slide in the first direction, and cannot rotate on its axis. At the same time, the limiting protrusions 521 in the slider 52 and the sliding-groove structure 53a in the guide-groove block 53 correspondingly cooperate with each other to circumferentially limit the position, so that the slider 52 can only slide in the second direction in the sliding-groove structure 53a, and thus the rotation of the outer toothed plate 32 is limited. The outer toothed plate 32 can only perform circular motion under the drive of the eccentric component, and the outer toothed plate 32 always meshes with the inner toothed plate 31, thereby driving the inner toothed plate 31 to rotate.

In addition, the guide-groove block 53 is fixedly connected to the fixed disc 2. The guide-groove block 53 strengthens the rigidity of the fixed disc 2. The movable disc 1 and the core member 3 are welded and reinforced, which is beneficial to improving the modal of the seat turntable mechanism.

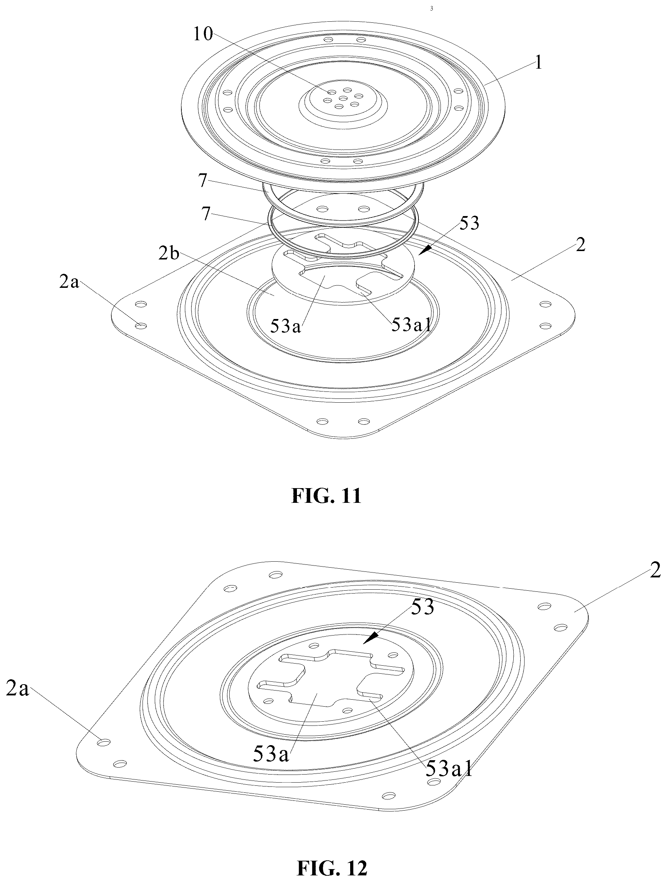

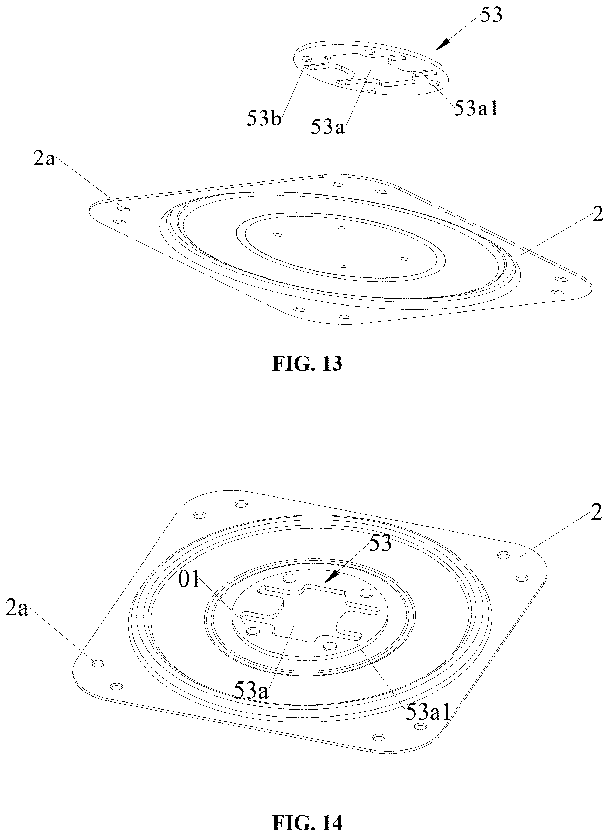

As mentioned above, the guide-groove block 53 is fixedly connected to the fixed disc 2. In practical applications, the connection manner between the guide-groove block 53 and the fixed disc 2 is not limited. As shown in FIG. 11, the guide-groove block 53 may be fixedly connected to the fixed disc 2 by welding. Alternatively, as shown in FIGS. 12 to 13, since the guide-groove block 53 conforms to the fine punching process, a stamping boss 53b may be formed on the guide-groove block 53 through a stamping process, a fixing hole may be correspondingly formed in the fixed disc 2, and the stamping boss 53b and the fixing hole are fitted in a plug-in manner correspondingly to realize a fixed connection. Alternatively, as shown in FIG. 14, a riveting hole is pre-set in the guide-groove block 53, and that the guide-groove block 53 and the fixed disc 2 are riveted and fixed through a rivet 01 is also feasible.

As shown in FIG. 11, an accommodating hole 2b is formed in the middle of the fixed disc 2, and the guide-groove block 53 and the slider 52 are both located inside the accommodating hole 2b.

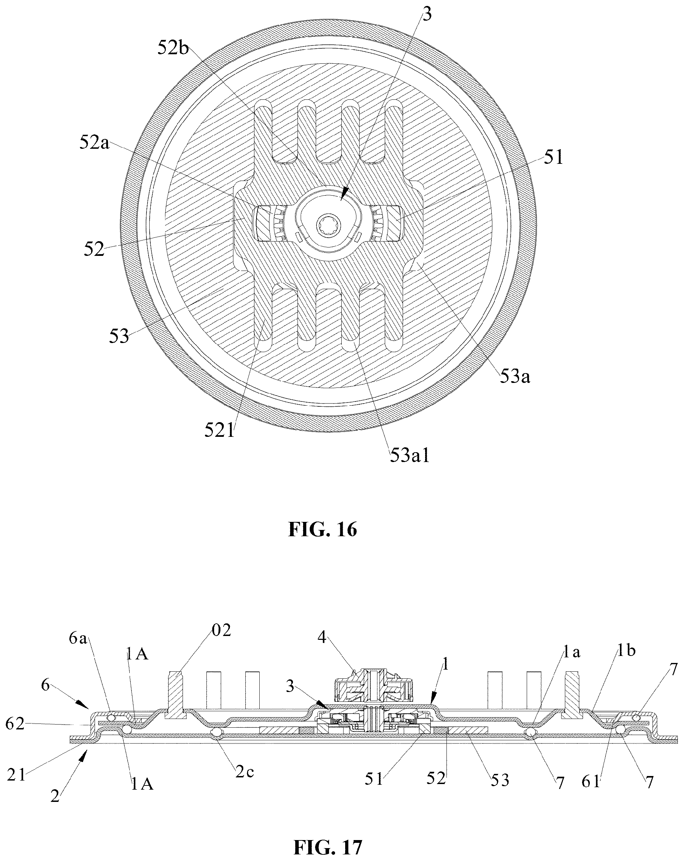

Continuing to refer to FIGS. 9 to 10, 15 to 16, FIG. 15 is a partial cross-sectional view of a seat turntable mechanism according to a second specific embodiment of the present application; and FIG. 16 is a cross-sectional view of the seat turntable mechanism according to the second specific embodiment of the present application.

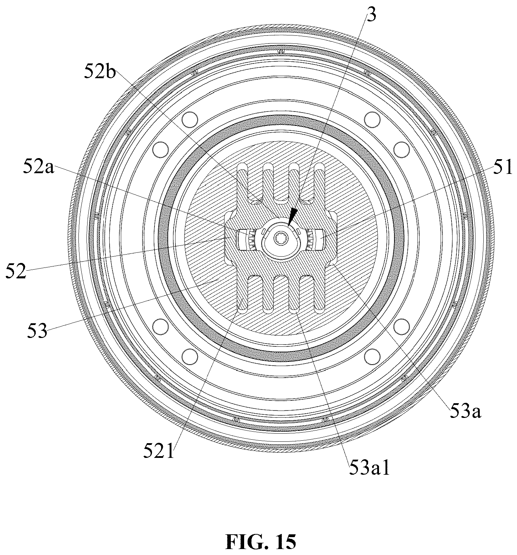

It can be seen from FIGS. 9 and 10 that in an embodiment, the number of limiting protrusions 521 arranged at each end of the slider 52 is two, and two limiting protrusions 521 are spaced apart in the first direction. It can be seen from FIGS. 15 and 16 that in an embodiment, the number of limiting protrusions 521 arranged at each end of the slider 52 is four, and four limiting protrusions 521 are spaced apart in the first direction.

It can be understood that in practical applications, the number of limiting protrusions 521 arranged at each end of the slider 52 may be adaptively adjusted according to strength requirements. For example, the number of limiting protrusions 521 arranged at each end of the slider 52 may be at least one. Moreover, in the case that the number of limiting protrusions 521 arranged at each end of the slider 52 is two or more, the limiting protrusions 521 at the same end are spaced apart in the first direction.

In addition, in the above two embodiments, the numbers of limiting protrusions 521 arranged at two ends of the slider 52 are equal, that is, the slider 52 is of a symmetrical structure.

In practical applications, it is also feasible for the slider 52 to be of an asymmetric structure. For example, the slider 52 has two ends in the second direction, two limiting protrusions 521 are provided at a first end of the two ends, and four limiting protrusions 521 are provided at a second end of the two ends. Alternatively, three limiting protrusions 521 are provided at the first end, and five limiting protrusions 521 are provided at the second end, which is feasible.

As mentioned above, the guide block 51 is fixedly connected to the outer toothed plate 32, and the guide block 51 and the outer toothed plate 32 may be integrally formed. Alternatively, the guide block 51 and the outer toothed plate 32 are separated structures and then welded and fixed together.

It should be noted that both the guide-groove block 53 and the slider 52 are reinforced parts, and bear relatively large loads during strength testing, and the overall strength of the seat turntable mechanism can be ensured in an effective and low cost way by using heat treatment of metal parts.

It can be seen that an avoidance hole 52b is formed in the middle of the slider 52, the avoidance hole 52b partially overlaps with the slider guide groove 52a, and the function of the avoidance hole 52b is to avoid the spline shaft.

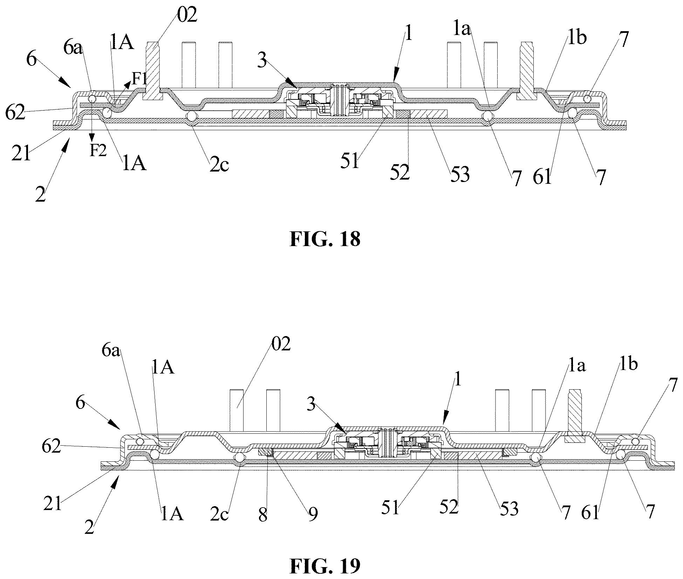

Continuing to refer to FIGS. 2, 17, and 18, FIG. 17 is a structural cross-sectional view of a first implementation for limiting the rotational degrees of freedom of a movable disc in the seat turntable mechanism shown in FIG. 1; and FIG. 18 is a force analysis diagram of a rolling assembly in FIG. 17.

As mentioned above, the movable disc 1 and the fixed disc 2 are connected and axially limited and are rotatable relative to each other in the circumferential direction. Specifically, in an embodiment, the seat turntable mechanism further includes an annular pressure disc 6. An outer edge of the annular pressure disc 6 is fixedly connected to an outer edge of the fixed disc 2. A limiting space that is annular is formed between the annular pressure disc 6 and the fixed disc 2, and an outer edge of the movable disc 1 is located in the limiting space;
the seat turntable mechanism further includes rolling assemblies 7. The rolling assemblies 7 are located between the movable disc 1 and the fixed disc 2, and between the annular pressure disc 6 and the movable disc 1. The annular pressure disc 6 and the fixed disc 2 apply a pressing force to the movable disc 1 through the rolling assemblies 7.

**In** this way, the movable disc 1 can be pressed and mounted in the limiting space through the rolling assemblies 7 on two sides, so that axial gap-free assembly of the movable disc 1 is realized, and the free drift of the movable disc 1 in the axial direction is prevented. In addition, sliding friction is converted into rolling friction, which reduces the friction force during the rotation of the movable disc 1 and improves the smoothness of the rotation of the movable disc 1.

The installation manner of the rolling assembly 7 between the movable disc 1 and the fixed disc 2 is as follows:
as shown in FIG. 17, an inner concave portion 1a that is annular is provided in the middle of the movable disc 1, and an outer convex portion 2c that is annular is provided at a corresponding position of the fixed disc 2, a ball groove is formed inside the outer convex portion 2c, and one of the rolling assemblies 7 is mounted in the ball groove and abuts against an inner wall of the inner concave portion 1a.

In this way, the ball groove positions the rolling assembly 7, ensuring the stability of the force applied to the rolling assembly 7. The inner concave portion 1a is provided in the movable disc 1 to abut against the rolling assembly 7, which can reduce the axial size of the rolling assembly 7 and reduce the overall weight of the rolling assembly 7 and the mechanism.

The installation manner of the rolling assembly 7 between the annular pressure disc 6 and the fixed disc 2 is as follows:
as shown in FIG. 17, an annular convex portion 6a protruding outward is provided in the middle of the annular pressure disc 6, and an annular groove is formed inside the annular convex portion 6a, the rolling assembly 7 is mounted in the annular groove and abuts against a corresponding side wall of the movable disc 1.

Similarly, the annular groove 6a positions the rolling assembly 7, ensuring the stability of the force applied to the rolling assembly 7.

Further, an inner edge of the annular pressure disc 6 is bent towards one side close to the movable disc 1 and forms an abutting portion 61, and there is a gap between the abutting portion 61 and an outer side wall of the movable disc 1.

In this way, under a normal working condition, the abutting portion 61 does not contact the movable disc 1, avoiding interference to the movement of the movable disc 1 and ensuring the smooth rotation of the movable disc 1. In the case that the seat tends to be peeled off (axially detached), such as in a three-point tensile test, a forward impact, or a lateral impact, the abutting portion 61 can abut against the outer side wall of the movable disc 1, providing additional resistance to peeling and preventing the seat from being axially detached.

As can be seen from the above, the seat needs to be ensured to rotate concentrically during the rotation. The seat is connected to the movable disc 1, so the rotational degrees of freedom of the movable disc 1 is required to be limited, and the movable disc 1 is constrained at the center of the seat turntable mechanism to ensure that the movable disc 1 rotates concentrically.

**In** the present application, the rotational degrees of freedom of the movable disc 1 is specifically limited as follows:
in a first implementation, as shown in FIG. 17, each of the movable disc 1 and the fixed disc 2 is correspondingly provided with a bent portion 1A at a position close to the outer edge, and an annular accommodating space **o** extending obliquely is formed between the two bent portions 1A. It can be seen that in a direction from a radial inner end to a radial outer end, the annular accommodating space o extends towards a side close to the movable disc 1, and one of the rolling assemblies 7 is mounted in the annular accommodating space o.

According to FIG. 18, it can be understood from force analysis of the rolling assembly 7 that a force applied by the movable disc 1 to the rolling assembly 7 passes through ball centers of balls in the rolling assembly 7. According to Newton's second law, a reaction force F1 of the force, that is, a force applied by the rolling assembly 7 to the movable disc 1, has a radial component force. The resultant force of the balls arranged circumferentially can constrain the movable disc 1 at the center of the seat turntable mechanism. Moreover, the axial component force applied by the rolling assembly 7 to the movable disc 1 can also provide axial support for the movable disc 1.

It can be seen from the above that the annular accommodating space o extending obliquely can play a role in generating a flexible and fixed rotation center for the movable disc 1. In specific engineering practice, molded dimensions of the two bent portions 1A may be adjusted according to the working conditions, that is, the inclination angle of the annular accommodating space o may be adjusted, so that the radial component force can be changed, and the center constraint rigidity for the movable disc 1 is improved.

As can be seen from FIG. 18, the role of the annular pressure disc 6 is, in a pre-pressing manner, to apply a pre-pressure F2 to the movable disc 1 through the rolling assembly 7. Under the combined action of the seat's own weight and the pre-pressure F2, the movable disc 1 automatically adapt to and is aligned with the center of the seat turntable mechanism, thereby achieving the design goal of restricting the rotational degrees of freedom of the movable disc 1.

In the embodiment, in the direction from the radial inner end to the radial outer end, the annular accommodating space o extends towards the side close to the movable disc 1, that is, extends upward obliquely. In practical applications, in the direction from the radial inner end to the radial outer end, the annular accommodating space o may extend towards a side close to the fixed disc 2, that is, extend downward obliquely. The force applied by the rolling assembly 7 to the movable disc 1 also has the radial component force, constraining the movable disc 1 at the center of the seat turntable mechanism.

Referring to FIG. 19, FIG. 19 is a structural cross-sectional view of a second implementation for limiting the rotational degrees of freedom of the movable disc in the seat turntable mechanism shown in FIG. 1.

It can be seen from the above that for the centering of the movable disc 1, the first implementation adopts the oblique force constraint of the rolling assembly 7. For some working conditions, such a working condition with a relatively large lateral force, seat vibration may still occur. Based on this, a second centering manner is provided according to the present application as follows.

In a second implementation, a positioning ring 8 and a self-lubricating bushing 9 are added on the basis of the first implementation. The positioning ring 8 is fixedly connected to a side wall of the movable disc 1 facing the fixed disc 2. In the installation state, the positioning ring 8 is located at an outer periphery of the guide-groove block 53, the positioning ring 8 and the guide-groove block 53 partially overlap in the axial direction, and the self-lubricating bushing 9 is mounted radially between the positioning ring 8 and the guide-groove block 53.

In this way, the coaxial positioning of the movable disc 1 and the fixed disc 2 can be realized through the positioning ring 8, the guide-groove block 53, and the self-lubricating bushing 9, achieving the design goal of constraining the rotational degrees of freedom of the movable disc 1.

**In** practical applications, it is also feasible that the inner wall of the positioning ring 8 and the outer wall of the guide-groove block 53 are in direct contact, and radial limiting of the movable disc 1 and the fixed disc 2 can also be realized.

**In** the embodiment, the self-lubricating bushing 9 is provided. The self-lubricating bushing 9 can reduce friction and eliminate gaps, and improve the positioning accuracy of the movable disc 1 and the fixed disc 2, which is a more preferred technical solution.

As shown in FIGS. 17 to 19, the movable disc 1 has a protrusion 1b that protrudes outward between the inner concave portion 1a and the bent portion 1A. A mounting bolt 02 is fixed at the protrusion 1b by riveting or welding to realize fixed connection with the seat.

It can be understood that in practical applications, the number of mounting bolt 02 is not limited, as long as the stability of the connection between the movable disc 1 and the seat can be ensured. In the case that the number of mounting bolt 02 is more than one, the more than one mounting bolt 02 may be distributed at intervals in the circumferential direction.

The positioning ring 8 and the movable disc 1 may be fixed by welding or riveting.

Continuing to refer to FIGS. 17 to 19, the outer edge of the fixed disc 2 has a first connection portion 21, and the outer edge of the annular pressure disc 6 has a second connection portion 62 that is bent towards the first connection portion 21 and then extends parallel to the first connection portion 21. The first connection portion 21 and the second connection portion 62 are fixedly connected, and there is a gap between the outer edge of the movable disc 1 and an inner wall of the second connection portion 62.

As mentioned above, when the seat is subjected to a very large lateral force, such as in a side impact experiment, and the movable disc 1 moves radially, the inner wall of the second connection portion 62 and the outer edge of the movable disc 1 are in an interference contact, so that the space of the movable disc 1 is constrained within a certain range in the radial direction to provide strong support.

A vehicle including a seat and the seat turntable mechanism described above is also provided according to the present application. The seat is connected to a bottom plate of the vehicle through the seat turntable mechanism.

The vehicle according to the present application includes the seat turntable mechanism described above, and therefore has the same technical effects as the seat turntable mechanism, which is not repeated here.

It can be understood that in the seat turntable mechanism, the fixed disc 2 is configured to connect the bottom plate, and the bottom plate here is the bottom plate of the vehicle.

The seat turntable mechanism and the vehicle according to the present application are introduced in detail above. Specific examples are used herein to illustrate the principles and implementations of the present application. The description of the embodiments is only used to help understand the methods and core ideas of the present application. It should be pointed out that for those skilled in the art, several improvements and modifications may be made to the present application without departing from the principles of the present application, and these improvements and modifications also fall within the protection scope of the claims of the present application.

## Claims

1. A seat turntable mechanism comprising a movable disc (1) and a fixed disc (2), wherein the movable disc (1) is configured to connect a seat, the fixed disc (2) is configured to connect a bottom plate, the movable disc (1) and the fixed disc (2) are connected and axially limited and are rotatable relative to each other in a circumferential direction, and the seat turntable mechanism further comprises a core member (3), a limiting member, and a drive component (4), wherein:
the core member (3) comprises an inner toothed plate (31) having an inner gear ring (a), an outer toothed plate (32) having an outer gear ring (b), an eccentric component, and a gap elimination component, wherein the inner toothed plate (31) is provided with a shaft shoulder (31a), the outer toothed plate (32) is provided with a shaft-center hole (32a), the outer gear ring (b) meshes with the inner gear ring (a), a radial eccentric area is formed between the shaft shoulder (31a) and the shaft-center hole (32a), the eccentric component is located in the radial eccentric area, the eccentric component, the inner gear ring (a), the outer gear ring (b) constitute a small teeth difference planetary gear transmission mechanism, and the gap elimination component is located in the radial eccentric area and is configured to apply a circumferential force to eliminate a gap between the eccentric component and the shaft-center hole (32a), and a gap between meshing teeth;
the drive component (4) is in transmission connection with the eccentric component, and the limiting member is configured to limit self-rotation of the outer toothed plate (32), so that the outer toothed plate (32) performs circular motion under a combined action of the eccentric component and the limiting member, the outer toothed plate (32) is configured to drive the inner toothed plate (31) to rotate, and the inner toothed plate (31) is fixedly connected to the movable disc (1).

2. The seat turntable mechanism according to claim 1, wherein the limiting member comprises a guide block (51), a slider (52), and a guide-groove block (53), wherein:
the guide block (51) is fixedly connected to the outer toothed plate (32), a slider guide groove (52a) is provided inside the slider (52), the slider guide groove (52a) extends in a first direction, the guide block (51) is located in the slider guide groove (52a), and the guide block (51) is only configured to move in the first direction in the slider guide groove (52a),
limiting protrusions (521) extending in opposite directions are provided at two ends of the slider (52) in a second direction, a sliding-groove structure (53a) is provided inside the guide-groove block (53), two ends of the sliding-groove structure (53a) in the second direction have limiting portions (53a1) extending in opposite directions, the slider (52) is mounted in the sliding-groove structure (53a), the limiting protrusions (521) are located in the limiting portions (53a1) in a one-to-one correspondence, the slider (52) is only configured to move in the second direction in the sliding-groove structure (53a), the guide-groove block (53) is fixedly connected to the fixed disc (2), and the first direction and the second direction are perpendicular to each other.

3. The seat turntable mechanism according to claim 2, wherein the number of the limiting protrusion (521) arranged at each end of the slider (52) is at least one, and in a case that the number of the limiting protrusion (521) arranged at each end of the slider (52) is two or more, two or more limiting protrusions (521) at the same end are spaced apart in the first direction.

4. The seat turntable mechanism according to any one of claims 1 to 3, further comprising an annular pressure disc (6), wherein an outer edge of the annular pressure disc (6) is fixedly connected to an outer edge of the fixed disc (2), a limiting space that is annular is formed between the annular pressure disc (6) and the fixed disc (2), and an outer edge of the movable disc (1) is located in the limiting space,
the seat turntable mechanism further comprises rolling assemblies (7), wherein the rolling assemblies (7) are located between the movable disc (1) and the fixed disc (2), and between the annular pressure disc (6) and the movable disc (1), and the annular pressure disc (6) and the fixed disc (2) apply a pressing force to the movable disc (1) through the rolling assemblies (7).

5. The seat turntable mechanism according to claim 4, wherein an inner concave portion (1a) that is annular is provided in the middle of the movable disc (1), an outer convex portion (2c) that is annular is provided at a corresponding position of the fixed disc (2), a ball groove is formed inside the outer convex portion (2c), and one of the rolling assemblies (7) is mounted in the ball groove and abuts against an inner wall of the inner concave portion (1a);
and/or, an annular convex portion (6a) protruding outward is provided in the middle of the annular pressure disc (6), an annular groove is formed inside the annular convex portion (6a), and the rolling assembly (7) is mounted in the annular groove and abuts against a corresponding side wall of the movable disc (1).

6. The seat turntable mechanism according to claim 4, wherein an inner edge of the annular pressure disc (6) is bent towards one side close to the movable disc (1) and forms an abutting portion (61), and there is a gap between the abutting portion (61) and an outer side wall of the movable disc (1).

7. The seat turntable mechanism according to claim 5, wherein each of the movable disc (1) and the fixed disc (2) is correspondingly provided with a bent portion (1A) at a position close to the outer edge, an annular accommodating space (o) extending obliquely is formed between the two bent portions (1A), and one of the rolling assemblies (7) is mounted in the annular accommodating space (o).

8. The seat turntable mechanism according to claim 2, further comprising a positioning ring (8), wherein
the positioning ring (8) is fixedly connected to a side wall of the movable disc (1) facing the fixed disc (2), and
in an installation state, the positioning ring (8) is located at an outer periphery of the guide-groove block (53), the positioning ring (8) and the guide-groove block (53) partially overlap in the axial direction, and opposite peripheral walls of the positioning ring (8) and the guide-groove block (53) are limited in a radial direction.

9. The seat turntable mechanism according to claim 4, wherein the outer edge of the fixed disc (2) has a first connection portion (21), the outer edge of the annular pressure disc (6) has a second connection portion (62) that is firstly bent towards the first connection portion (21) and then extends parallel to the first connection portion (21), the first connection portion (21) and the second connection portion (62) are fixedly connected, and there is a gap between the outer edge of the movable disc (1) and an inner wall of the second connection portion (62).

10. The seat turntable mechanism according to claim 7, wherein the movable disc (1) is provided with a protrusion (1b) protruding outward between the inner concave portion (1a) and the bent portion (1A), a mounting bolt (02) is fixed at the protrusion (1b), and the mounting bolt (02) is configured to be fixedly connected to the seat.

11. A vehicle comprising a seat, wherein the vehicle further comprises the seat turntable mechanism according to any one of claims 1 to 10, and the seat is connected to a bottom plate of the vehicle through the seat turntable mechanism.
